# EUROPEAN PATENT SPECIFICATION

(11) **EP 0 516 378 B1**
(45) Date of publication and mention of the grant of the patent: **08.01.1997**
(21) Application number: 92304770.8
(22) Date of filing: 27.05.1992
(51) Int. Cl.: H04N 5/232, H04N 5/335, H04N 5/073, H04N 7/087

(54) **Remote control device for video cameras**
Fernsteuerungsvorrichtung für Videokameras
Dispositif de commandes à distance pour caméras vidéo

(30) Priority: 27.05.1991 JP 151019/91
(43) Date of publication of application: 02.12.1992
(73) Proprietor: SONY CORPORATION, Tokyo 141 (JP)
(72) Inventor: Nishimura, Yoshikazu, Shinagawa-ku, Tokyo (JP); Nakamura, Takashi, Shinagawa-ku, Tokyo (JP)
(74) Representative: Cotter, Ivan John

(56) References cited:
- EP-A- 0 202 683
- EP-A- 0 420 289
- DE-A- 3 248 216
- US-A- 3 629 506
- ELECTRONICS. vol. 41, no. 17, 19 August 1968, NEW YORK US pages 74 - 83; M. KRONENBERG ET AL.: "CBS nominates a convention hopeful"

## Description

This invention relates to controlling video cameras.

Video cameras for use by broadcasting stations are each controlled by a separate camera control unit (called a CCU) with regard to diaphragm opening and other settings. The camera is also controlled by the CCU so that the signal output by the camera will synchronise with an externally furnished reference video signal (i.e., the camera is placed under so-called 'genlock' control).

During a camera-based programme broadcast, each participating video camera is generally connected to its camera control unit via cables such as triax cables. In some cases, it is not possible or convenient to use cable-based connections between the video camera and the CCU; these physical connections are then replaced by radio communications.

The radio communications from each video camera to the CCU involve, on the one hand, the use of a microwave circuit. On the other hand, control commands from the CCU to each video camera are transmitted over a voice communication radio channel.

Conventional camera control systems in which video cameras are each connected to a CCU by radio communication have some disadvantages that are not experienced with a cable-based camera-to-CCU connection. Some of these disadvantages will be discussed below.

Where a video camera and a CCU are connected by cable, CCU-initiated control commands and camera-initiated commands are transmitted bidirectionally therebetween. That is, the CCU transmits control commands to the camera over the cable. In turn, the video camera sends to the CCU over the same cable such commands as a camera status signal (defining camera diaphragm setting, etc. ) and a call command by which the camera operator calls up the CCU.

Where the video camera and the CCU are connected by a radio channel, the commands are transmitted unidirectionally, i.e., only from the CCU to the camera. It is impossible for the camera to send the camera status signal, call command or other commands to the CCU over the radio channel.

The radio channel for control command transmission is a voice communication radio channel. This means that when a genlock reference signal is sent to the camera over the radio channel, genlock control becomes very vulnerable to external disturbances. With the genlock control signal sent over the conventional voice communication radio channel, the genlock system is markedly susceptible to Doppler shifts. Furthermore, the lock range is narrow and phase jitter is likely with the genlock system. Thus, the genlock of the output video signal is potentially much less stable with the radio-based connection between camera and CCU than with the cable-based connection therebetween.

The article, "CBS nominates a convention hopeful", Electronics, vol 41, no. 17 (19/8/68) pp 74-83 discloses a camera and CCU system in which the remote CCU issues genlocking control commands to the camera. EP-A-0 202 683 discloses a video time-base correction apparatus.

This invention provides a video camera apparatus including a video camera for generating a video signal and a camera control unit for generating a control signal for controlling said video camera, said camera control unit comprising: first receiving means for receiving a video signal transmitted from said video camera; means for comparing the relative phase of a video signal received by said first receiving means with that of a reference signal so as to generate a phase difference signal representing the phase difference in terms of the number of video lines the video signal is out of phase with respect to the reference signal, said phase difference signal representing a zero phase difference if the phase difference between the received video signal and the reference signal is less than one line; first transmitting means for transmitting said phase difference signal to said video camera over a radio channel; memory means for storing said video signal received by said first receiving means; means for generating a write clock signal, in response to said video signal received by said first receiving means, for controlling writing of said video signal to said memory means; and means for generating a read clock signal, in response to said reference signal, for controlling reading of said video signal from said memory means; and said video camera comprising: second receiving means for receiving said phase difference signal transmitted from said camera control unit; means for generating a synchronizing signal; means for controlling the phase of said synchronizing signal in accordance with said phase difference signal received by said second receiving means; image pickup means for generating said video signal in accordance with said synchronizing signal; and second transmitting means for transmitting said video signal over a radio channel.

This invention also provides a camera control unit for generating a control signal for controlling a video camera, said camera control unit comprising: means for receiving a video signal transmitted from said video camera over a radio channel; means for comparing the relative phase of said video signal received by the receiving means with that of a reference signal so as to generate a phase difference signal representing the phase difference in terms of the number of video lines the video signal is out of phase with respect to the reference signal, said phase difference signal representing a zero phase difference if the phase difference between the received video signal and the reference signal is less than one line; transmitting means for transmitting said phase difference signal to said video camera over a radio channel; memory means for storing said video signal received by said receiving means; means for generating a write clock signal, in response to said video signal received by said receiving means, for controlling writing of said video signal to said memory means; and means for generating a read clock signal, in response to said reference signal, for controlling reading of said video signal from said memory means.

In at least a preferred embodiment the invention provides a video camera apparatus capable of generating an output video signal under stable genlock control for radio communication between camera and CCU.

The invention will now be described by way of example with reference to the accompanying drawings, throughout which like parts are referred to by like references, and in which:
Figure 1 is a block diagram of a video camera and a camera control unit;
Figure 2 is a block diagram of a base unit contained in the camera control unit of Figure 1;
Figure 3 is a block diagram of a phase comparison circuit included in the base unit of Figure 2;
Figure 4 is a circuit diagram of a black burst generator incorporated in the camera control unit of Figure 1;
Figure 5 is a block diagram of another camera control unit, the unit being capable of transmitting control and camera output signals both by cable and over a radio channel; and
Figure 6 is a block diagram of a video camera.

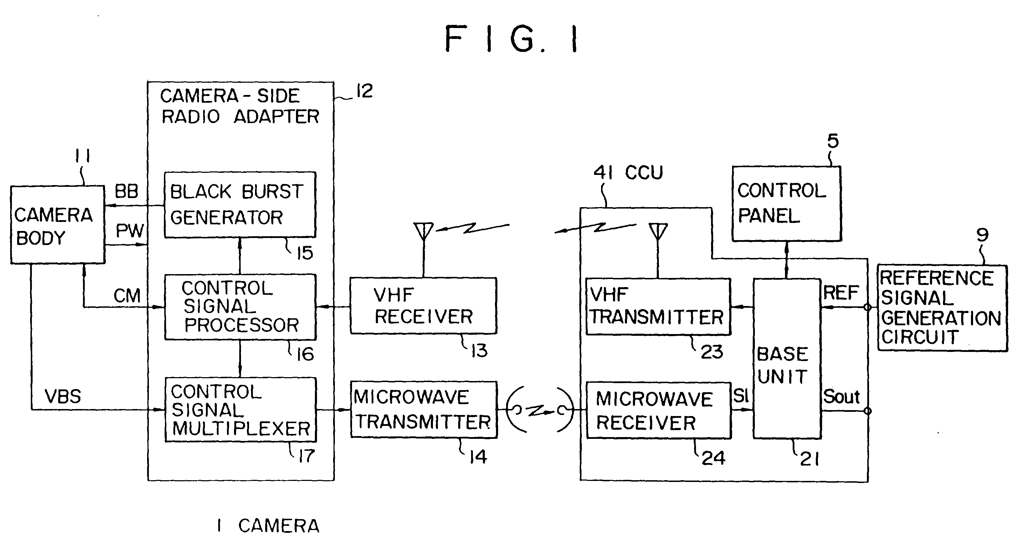

Figure 1 is a block diagram of a video camera 1 and a camera control unit (CCU) 41 embodying the invention. The CCU 41 has a control panel 5. The video camera 1 comprises a camera body 11, a camera-side radio adapter 12, a very high frequency (VHF) receiver 13, and a microwave transmitter 14 for transmitting the camera output to the CCU 41. The camera body 11 supplies power PW to the camera-side radio adapter 12. The camera-side radio adapter 12 contains a black burst generator 15, a control signal processor 16 and a control signal multiplexer 17.

The CCU 41 comprises a base unit 21, a VHF transmitter 23, and a microwave receiver 24 that receives signals sent from the microwave transmitter 14 of the video camera 1.

The VHF transmitter 23 of the CCU 41 receives command signals from the base unit 21 and modulates the command signals using single-side-band (SSB) modulation for transmission to the video camera 1. Furthermore, the VHF transmitter 23 supplies the video camera 1 (using SSB modulation) with a frame error signal ΔV indicating the line divergence per frame of the camera output with respect to a reference video signal REF (supplied, for example by a reference video signal generation circuit 9), as will be described later.

The VHF receiver 13 of the video camera 1 receives and demodulates the output from the VHF transmitter 23. The demodulated output is sent to the control signal processor 16 of the camera-side radio adapter 12. The control signal processor 16 decodes command signals based on the signals received from the CCU 41, and forwards the decoded command signals to the camera body 11. The command signals, upon receipt by the camera body 11, control it as designated. The control signal processor 16 sends the frame error signal ΔV to the black burst generator 15.

In turn, the black burst generator 15 generates a black burst signal BB comprising a synchronizing signal and a burst signal, the latter acting as a colour synchronizing signal. Upon receipt of the frame error signal ΔV from the control signal processor 16, the black burst generator 15 generates a black burst signal BB in accordance therewith. In this case, the black burst signal BB is synchronized substantially with the genlock-controlled output from the CCU 41.

The black burst signal BB from the black burst generator 15 is fed to a genlock black burst signal input terminal of the camera body 11. Given the black burst signal BB, the camera body 11 outputs a camera output video signal VBS in accordance therewith. The video signal VBS is supplied to the control signal multiplexer 17 of the camera-side radio adapter 12.

In addition, the camera body 11 returns to the control signal processor 16 a status signal indicating the status the camera is in upon receipt of a control signal. The control signal processor 16 feeds the status signal to the control signal multiplexer 17. In turn, the control signal multiplexer 17 multiplexes the status signal into, for example, vertical blanking periods of the video signal VBS. If, for example, the camera operator pushes a call switch, a call command signal is sent by the control signal processor 16 to the control signal multiplexer 17 and is multiplexed into vertical blanking periods of the video signal VBS.

The signal from the control signal multiplexer 17 is fed to the microwave transmitter 14 for modulation into a microwave signal. The microwave signal is sent to the CCU 41. The microwave receiver 24 of the CCU 41 receives the signal, demodulates it, and supplies the demodulated signal to the base unit 21.

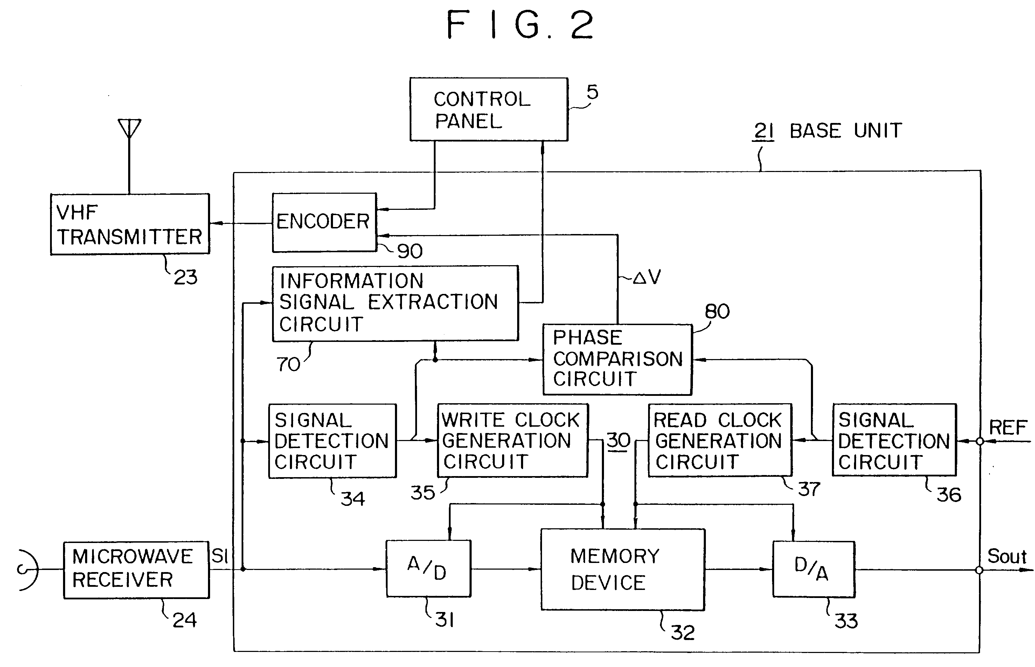

A typical construction of the base unit 21 is shown in Figure 2. As shown in Figure 2, the base unit 21 comprises a synchronising video signal generation circuit 30, an information signal extraction circuit 70, a phase comparison circuit 80 and an encoder 90. Based on the camera output received from the microwave receiver 24, the synchronizing video signal generation circuit 30 generates a video signal in synchronism with the reference video signal. The information signal extraction circuit 70 extracts the multiplexed additional information sent from the video camera 1. The phase comparison circuit 80 generates the frame error signal ΔV based on the discrepancy between the reference video signal REF directed to the video camera 1 on the one hand, and the camera output video signal VBS on the other. The encoder 90 encodes a control signal to be sent to the video camera 1.

The synchronizing video signal generation circuit 30 comprises an analogue to digital (A/D) converter 31, a memory device 32 having a two-field memory capacity, a digital to analogue (D/A) converter 33, signal detection circuits 34 and 36 for detecting the synchronizing signal and colour burst signal from the video signals VBS and REF respectively, a write clock generation circuit 35, and a read clock generation circuit 37.

A camera output video signal Si from the microwave receiver 24 is converted to digital format by the A/D converter 31. The digitized signal is then written to the memory device 32.

The camera output video signal Si from the microwave receiver 24 is also fed to the signal detection circuit 34. From the video signal Si, the signal detection circuit 34 detects the synchronizing signal and colour burst signal. When detected, the synchronizing signal and colour burst signal are supplied to the write clock generation circuit 35. The write clock generation circuit 35 generates a write clock signal in synchronism with synchronizing signal and colour burst signal detected from the video signal Si. The write clock signal is sent both to the A/D converter 31 and to the memory device 32. Thus, writing of the video signal Si to the memory device 32 is accomplished using the write clock signal synchronized withe the synchronizing and colour burst signals contained in the video signal Si.

The reference video signal REF is supplied to the signal detection circuit 36 of the base unit 21. The signal detection circuit 36 detects the synchronizing signal and colour burst signal from the reference video signal REF. When detected, the synchronizing signal and colour burst signal are sent to the read clock generation circuit 37. In turn, the read clock generation circuit 37 generates a read clock signal in synchronism with the synchronizing and colour burst signals contained in the reference video signal REF. The read clock signal is fed both to the D/A converter 33 and to the memory device 32. Thus, reading of the video signal from the memory device 32 is achieved using the read clock signal synchronized with the synchronizing and colour burst signals contained in the reference video signal REF. In this manner, the output video signal Sout from the D/A converter 33 turns into a signal synchronized with the reference video signal REF (i.e., a genlock-controlled signal).

The camera output video signal Si from the microwave receiver 24 is sent to the information signal extraction circuit 70 which also receives a synchronizing signal from the signal detection circuit 34. Using the synchronizing signal, the information signal extraction circuit 70 generates a gate signal for demultiplexing the information signal that is multiplexed in the vertical blanking periods of the video signal received from the video camera 1. By so doing, the information signal extraction circuit 70 extracts from the video signal Si such additional signals as the information signal. After being extracted, the information signal and other signals are supplied to the control panel 5. In turn, the control panel 5 displays, for example, indications of the status check on the video camera 1 as well as a call indication corresponding to the call command.

Although the camera output video signal Si remains asynchronous with the reference video signal REF, the fact remains that the synchronizing signal of the camera output video signal is detected by the signal detection circuit 34 of the synchronizing video signal generation circuit 30 and that the gate signal for extracting the information signal from the video camera 1 is generated based on that synchronizing signal. This makes it possible to extract reliably the information signal from the video camera 1, that signal having been multiplexed in vertical blanking periods.

In the above example, the frame error signal ΔV representing the discrepancy between the signal Si and the reference video signal REF is transmitted as the control command. That is, the synchronizing signal of the camera output video signal from the signal detection circuit 34 and the synchronizing signal of the reference video signal REF from the signal detection circuit 36 are supplied to the phase comparison circuit 80 for phase comparison.

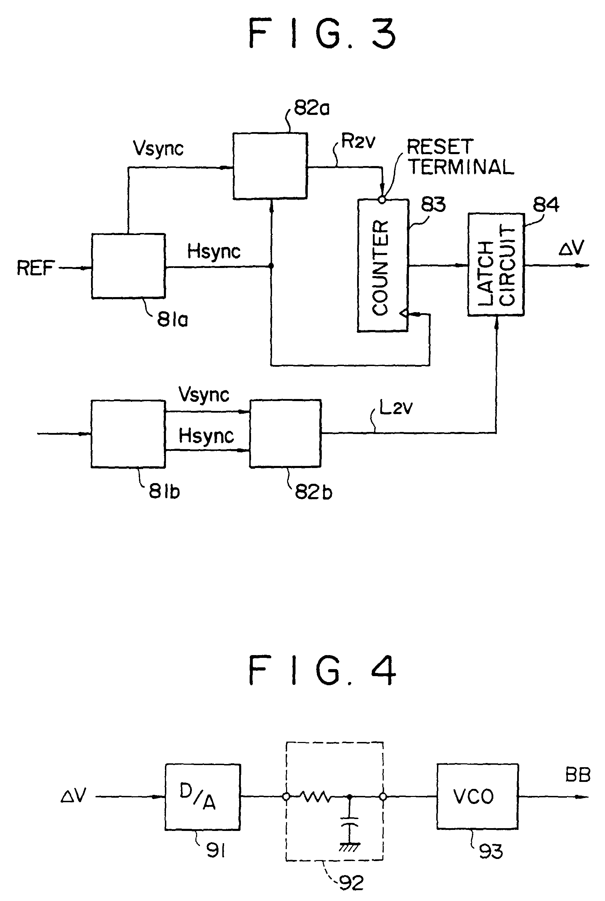

A phase comparison circuit 80 for use with the NTSC system will now be described with reference to Figure 3. In Figure 3, the reference video signal REF is fed to a vertical/horizontal synchronizing signal separation circuit 81a and is separated thereby into a vertical synchronizing signal Vsync (REF) and a horizontal synchronizing signal Hsync(REF). The two synchronizing signals obtained by the vertical/horizontal synchronizing signal separation circuit 81a are supplied to a one-frame rate signal generation circuit 82a. Under the NTSC system, the starting phase of the vertical synchronizing signal Vsync (REF) is a half-cycle out of phase with that of the horizontal synchronizing signal Hsync(REF) between odd and even fields. This characteristic is utilized by the one-frame rate signal generation circuit 82a in acquiring a two-field rate signal, i.e., a one-frame rate signal R₂ᵥ from the vertical synchronizing signal Vsync (REF) and the horizontal synchronizing signal Hsync (REF).

The horizontal synchronizing signal Hsync (REF) is also fed to a counter 83 which counts the received signal for each frame. A reset terminal of the counter 83 is supplied with the one-frame rate signal R₂ᵥ from the one-frame rate signal generation circuit 81a. The signal R₂ᵥ clears the count of the horizontal synchronizing signal Hsync (REF) for each frame. The count of the counter 83 is sent to a latch circuit 84.

The synchronizing signal of the camera output video signal Si from the signal detection circuit 34 is fed to a vertical/horizontal synchronizing signal separation circuit 81b and is separated thereby into a vertical synchronizing signal Vsync (VIDEO) and a horizontal synchronizing signal Hsync (VIDEO). The vertical synchronizing signal Vsync (VIDEO) and the horizontal synchronizing signal Hsync (VIDEO) are sent to a one-frame rate signal generation circuit 82b. As with the one-frame rate signal generation circuit 82a, the circuit 82b provides a one- frame rate signal L₂ᵥ.

The latch circuit 84, supplied with the one-frame rate signal L₂ᵥ from the one-frame rate signal generation circuit 82b, latches the count of the counter 83 per frame. The latched count is sent to the encoder 90 as the frame error signal ΔV.

If there is a phase difference of at least one line between the reference video signal REF and the camera output video signal from the signal detection circuit 34, the latch circuit 34 latches the count of the counter 83 (i.e., as long as that count is other than 0). The count at this point, output as the frame error signal ΔV, indicates the phase difference (in terms of the number of out-of-phase lines) between the reference video signal REF and the camera output video signal from the signal detection circuit 34.

If the phase difference between the reference video signal REF and the camera output video signal from the signal detection circuit 34 is less than one line, the latch circuit 84 latches the count of the counter 83 as soon as the counter 83 is reset by the one-frame rate signal R₂ᵥ. This time, the frame error signal ΔV is 0.

The frame error signal ΔV is supplied to the encoder 90. More specifically, the phase comparison circuit 80 obtains the frame error ΔV indicating the number of out-of-phase lines per frame between the two video signals. The frame error signal ΔV is then sent to the encoder 90. The encoder 90 encodes the frame error signal ΔV and sends the encoded result to the VHF transmitter 23 for SSB modulation. The modulation error signal is transmitted to the video camera 1.

A command signal from the control panel 5 is like-wise fed to the VHF transmitter 23 via the encoder 90. In turn, the VHF transmitter 23 transmits the command signal to the video camera 1.

The control signal processor 16 in the radio adapter 12 of the video camera 1 decodes the frame error signal ΔV, as described earlier. The decoded frame error signal ΔV is supplied to the black burst generator 15. This causes the black burst signal BB to synchronize substantially in phase with the synchronizing signal of the reference video signal REF on the side of the CCU 41.

Figure 4 shows a typical circuit construction of the black burst generator 15, the generator comprising a D/A converter 91, a loop filter 92 and a voltage controlled oscillator (VCO) 93. The frame error signal ΔV is first converted from digital to analogue format by the D/A converter 91. The converted signal is supplied via the loop filter 92 to the VCO 93. The VCO 93 controls its oscillating frequency in accordance with the voltage supplied through the loop filter 92, whereby the black burst signal is generated. The loop filter 92, which provides a time constant, is incorporated here to remove noise elements contained in the frame error signal ΔV. The black burst generator 15 thus controls the phase of the black burst signal in accordance with the frame error signal ΔV.

As described, the present embodiment, in which the CCU and the video camera are connected by radio communication, provides an output video signal Sout under stable genlock control. One modification of this embodiment is to transmit the frame error signal from the CCU to the camera, not only in terms of the above-mentioned line divergence, but also in terms of the phase difference between horizontal synchronizing signals.

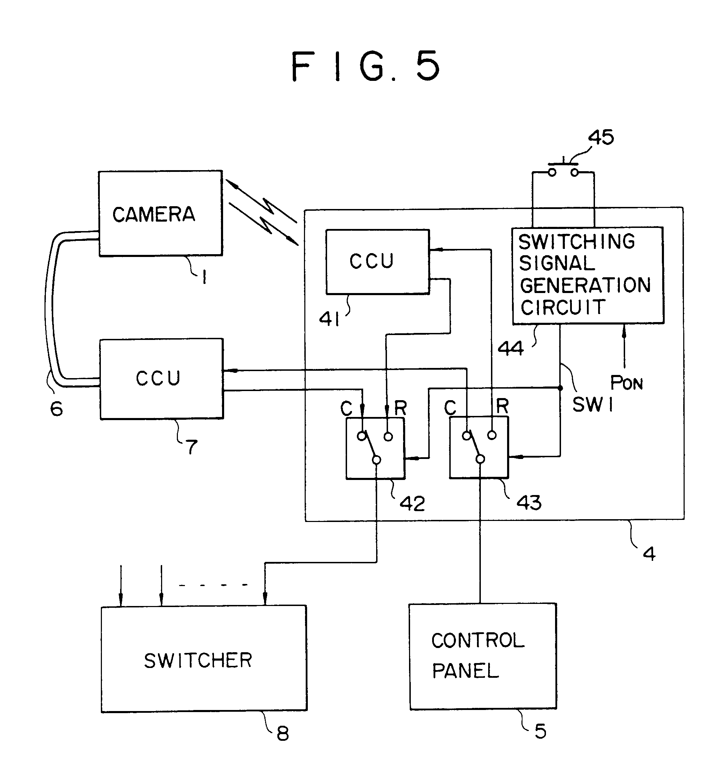

Figure 5 is a block diagram of a second camera control unit embodying the invention. This camera control unit is capable of transmitting the control and camera output signals both by cable and over a radio channel. In Figures 1, 2 and 5, like reference numerals designate like or corresponding parts. Referring to Figure 5, a switcher 8 typically receives video signals from a plurality of video cameras and switches these signals for transmission to monitor equipment (not shown). A control panel 5 is provided for each of the video cameras.

The video camera 1 is connected to a CCU 7 by a cable 6. As with its counterpart in Figure 1, the video camera 1 has a camera-side radio adapter 12 for communication over a radio channel with a radio adapter 4.

The CCU 7 supplies the video camera 1, through the cable 6, with such camera control signals as a genlock control signal and a diaphragm control signal. From the video camera 1, the CCU 7 receives through the cable 6 a genlock controlled video signal as well as a camera status signal for verifying the diaphragm setting and other camera status. Furthermore, the CCU 7 outputs the video signal through its output terminal.

The radio adapter 4 comprises a CCU 41, a video signal changeover switch 42, a control signal changeover switch 43 and a switching signal generation circuit 44.

As with its counterpart in Figures 1 and 2, the CCU 41 supplies the video camera 1 with command signals such as the frame error signal for genlock control and the diaphragm control signal, sent over a voice communication channel. The command signals are modulated into VHF signals before being transmitted by radio to the video camera 1. The video signal from the video camera 1 is sent, for example, over a microwave channel. The video signal is received and demodulated by the CCU 41 for output through the output terminal thereof.

An input terminal C of the video signal changeover switch 42 in the radio adapter 4 receives the video signal from the CCU 7; an input terminal R of the switch 42 receives the video signal from the CCU 41. The video signal selected by the changeover switch 42 is fed to an input terminal of the switcher 8 corresponding to the camera number of the video camera 1 in question.

The command signal changeover switch 43 in the radio adapter 4 receives command signals from the control panel 5. The command signal obtained at an output terminal C of the changeover switch 43 is sent to the CCU 7, and the command signal obtained at an output terminal R of the changeover switch 43 is supplied to the CCU 41.

When the power switch of the radio adapter 4 is turned off, the changeover switches 42 and 43 are set to the input terminal C and to the output terminal C, respectively. The switching signal generation circuit 44 generates a switching signal SW1 for operating the changeover switches 42 and 43. The switching signal generation circuit 44 is supplied with a signal Pon that corresponds to the on-off action of the power switch of the radio adapter 4. The switching signal generation circuit 44 is connected with a manual switch 45. The status of the switching signal SW1 is determined by the signal Pon and by operation of the manual switch 45.

Specifically, turning on the power switch of the radio adapter 4 causes the switching signal SW1 to set the changeover switches 42 and 43 forcibly to the input terminal R and to the output terminal R, respectively. When the manual switch 45 is pushed while the power switch is kept on, the changeover status of the switches 42 and 43 is reversed. When the power switch of the radio adapter 4 is turned off, the switching signal SW1 sets the changeover switches 42 and 43 forcibly to the input terminal C and to the output terminal C, respectively.

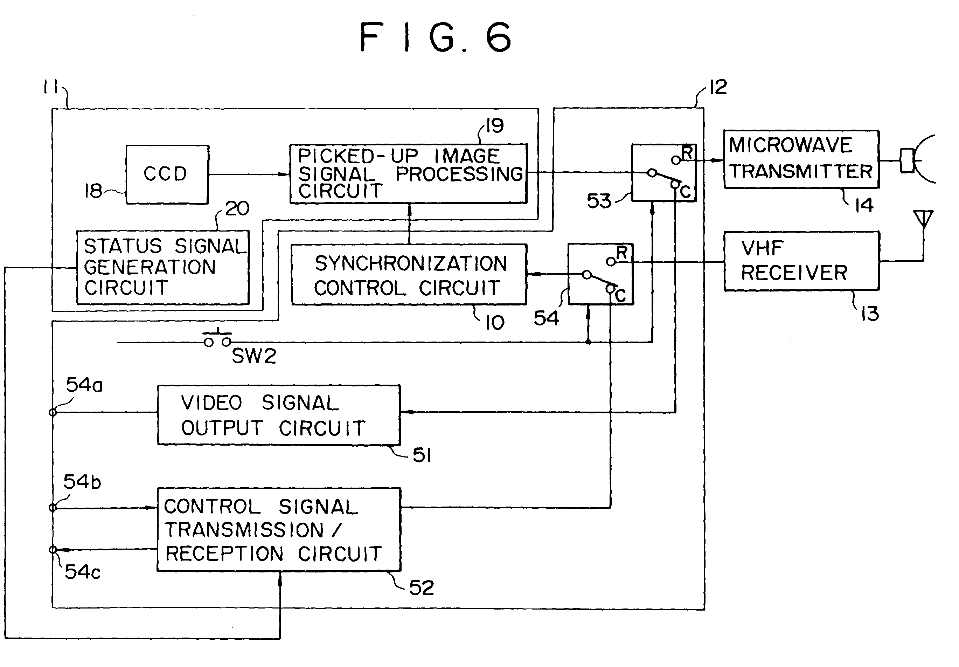

Figure 6 is a block diagram of the video camera 1. The video camera 1 comprises a charge-coupled device (CCD) solid-state image pick-up device 18, a picked-up image signal processing circuit 19, a genlock synchronization control circuit 10, a changeover switch 53, a microwave transmission circuit (microwave transmitter) 14, a VHF reception circuit (VHF receiver) 13, a control signal changeover switch 54, a video signal output circuit 51, and a control signal transmission/reception circuit 52. The changeover switch 53 switches the output signal of the picked-up image signal processing circuit 19 (i.e., video signal) between two modes: one in which the CCU 7 operates, the other in which the CCU 41 of the radio adapter 4 operates (to be described later in more detail). The video signal output circuit 51 outputs the video signal onto the cable 6.

The microwave transmission circuit 14 modulates the video signal into a microwave band signal for transmission over a microwave channel. The CCU 41, as described, comprises demodulating means for demodulating the microwave video signal back to the initial band video signal. From the CCU 41 of the radio adapter 4, the VHF reception circuit 13 receives control signals in the form of modulated signals transmitted over a VHF band channel for voice communication.

The picked-up image signal from the CCD solid-state image pick-up device 18 is supplied to the picked-up image signal processing circuit 19. The picked-up image signal processing circuit 19 also receives a synchronizing signal and a subcarrier from the synchronization control circuit 10. The synchronizing signal and the subcarrier from the synchronization control circuit 10 are synchronized with the reference video signal in accordance with the control signal from the CCU 7 or from the CCU 41 of the radio adapter 4. Thus, the output video signal from the picked-up image signal processing circuit 19 is kept under genlock control.

The video signal from the picked-up image signal processing circuit 19 is sent to the changeover switch 53. Under control of a cable/radio switching signal SW2, the changeover switch 53 is set to the output terminal C when the CCU 7 is used for camera control (i.e., cable-based setup) and the switch 53 is set to the output terminal R when the CCU 41 of the radio adapter 4 is used (i.e., radio-based setup). Also under control of the switching signal SW2, the changeover switch 54 is set to the input terminal C for the cable-based setup and to the input terminal R for the radio-based setup. These switching operations are illustratively carried out manually.

If the cable-based setup is selected with the video camera 1, a genlock control signal comes from the CCU 7 and appears at the input terminal 54b connected to the cable 6. The genlock control signal is fed to the synchronization control circuit 10 via the control signal transmission/reception circuit 52 and switch 54 for genlock control.

The video signal from the picked-up image signal processing circuit 19 is sent through the changeover switch 53 to the video signal output circuit 51. In turn, the video signal output circuit 51 forwards the video signal to the terminal 54a connected with the cable 6. In this manner, the video signal is supplied to the CCU 7 via the cable 6. In the cable-based setup, a status signal generation circuit 20 in the video camera 1 sends to the terminal 54c a signal indicating camera status such as the diaphragm setting, the terminal 54c being connected to the cable 6. From the terminal 54c, the status signal is transmitted to the CCU 7.

If the radio-based setup is selected with the video camera 1, the control signal received by an antenna connected to the VHF reception circuit 13 is fed to the synchronization control circuit 10 via the VHF reception circuit 13 and switch 54 for genlock control. The video signal from the picked-up image signal processing circuit 19 is supplied via the changeover switch 53 to the microwave transmission circuit 14. In turn, the microwave transmission circuit 14 transmits the video signal via an antenna to the CCU 41.

A description will now be given of how the camera control system of the above-described construction works.

When it is desired to have the video camera 1 controlled by the CCU 7, the power switch of the radio adapter 4 is left turned off. In this state, as described earlier, the switches 42 and 43 of the radio adapter 4 are set to the input terminal C and to the output terminal C, respectively. Where the power switch of the radio adapter 4 is turned on, the switch 45 is operated to set the changeover switches 42 and 43 to the input terminal C and to the output terminal C, respectively.

At this time, control signals from the control panel 5 are sent to the CCU 7 via the changeover switch 43 of the radio adapter 4. The genlock control signal and the camera control signal from the CCU 7 are fed to the video camera 1 via the cable 6 for control of the camera. The genlock-controlled video signal from the video camera 1 is supplied to the CCU 7 via the cable 6. The video signal is fed from the CCU 7 to the switcher 8 via the changeover switch 42 of the radio adapter 4.

When it is desired to have the video camera 1 controlled by the CCU 41, the power switch of the radio adapter 4 is turned on. This enables the switches 42 and 43 of the radio adapter 4 to be set to the input terminal R and to the output terminal R, respectively, as described earlier.

At this point, the control signal from the control panel 5 is sent to the CCU 41 via the changeover switch 43 of the radio adapter 4. The genlock control signal and the camera control signal from the CCU 41 are fed over a radio channel to the video camera 1 for camera control. The genlock-controlled video signal from the video camera 1 is sent to the CCU 41 over a radio channel. The video signal is sent from the CCU 41 to the switcher 8 via the changeover switch 42.

As described, the camera control system of the above construction switches the CCU 7 and CCU 41 when the power switch of the radio adapter 4 is simply turned on and off. There is no need for the physical cable switching that is required conventionally. The switch 45 permits changeover from the currently used CCU 41 to the CCU 7 when the power switch of the radio adapter 4 is turned on.

In the above example, the changeover switches 42 and 43 are operated in conjunction with the power switch of the radio adapter 4. Alternatively, the switches 42 and 43 may be operated manually.

## Claims

1. A video camera apparatus including a video camera (1) for generating a video signal (VBS) and a camera control unit (41) for generating a control signal for controlling said video camera, said camera control unit (41) comprising:
first receiving means (24) for receiving a video signal (VBS) transmitted from said video camera (1);
means (80) for comparing the relative phase of a video signal (VBS) received by said first receiving means (24) with that of a reference signal (REF) so as to generate a phase difference signal (ΔV) representing the phase difference in terms of the number of video lines the video signal (VBS) is out of phase with respect to the reference signal (REF), said phase difference signal representing a zero phase difference if the phase difference between the received video signal (VBS) and the reference signal (REF) is less than one line;
first transmitting means (23) for transmitting said phase difference signal (ΔV) to said video camera (1) over a radio channel;
memory means (32) for storing said video signal (VBS) received by said first receiving means (24);
means (34, 35) for generating a write clock signal, in response to said video signal (VBS) received by said first receiving means (24), for controlling writing of said video signal (VBS) to said memory means (32); and
means (36, 37) for generating a read clock signal, in response to said reference signal (REF), for controlling reading of said video signal (VBS) from said memory means (32);
and said video camera (1) comprising:
second receiving means (13) for receiving said phase difference signal (ΔV) transmitted from said camera control unit (41);
means (15) for generating a synchronizing signal (BB);
means (91, 92, 93) for controlling the phase of said synchronizing signal (BB) in accordance with said phase difference signal (ΔV) received by said second receiving means (13);
image pickup means (18) for generating said video signal (VBS) in accordance with said synchronizing signal (BB); and
second transmitting means (14) for transmitting said video signal (VBS) over a radio channel.

2. Apparatus according to claim 1, wherein said first transmitting means (23) is operative to transmit said phase difference signal (ΔV) over a radio channel in the very high frequency (VHF) band, and said second transmitting means is operative to transmit said video signal (VBS) over a radio channel in the microwave frequency band.

3. Apparatus according to claim 1 or claim 2, wherein said camera control unit (41) comprises an encoder (90) for generating a composite signal of said control signal and said phase difference signal (ΔV).

4. Apparatus according to claim 3, wherein said first transmitting means (24) is operative to transmit said composite signal over said radio channel for transmitting said phase difference signal (ΔV).

5. A video camera apparatus according to any one of the preceding claims, wherein said comparing means (80) comprises:
first separating means (81a) for separating a first vertical blanking signal (Vsync (REF)) and a first horizontal blanking signal (Hsync (REF)) from said reference signal (REF);
first generating means (82a) connected to be supplied with said first vertical blanking signal (Vsync (REF)) and said first horizontal blanking signal (Hsync (REF)) for generating a first one frame rate signal (R₂ᵥ);
a counter (83) for counting the number of pulses of said first horizontal blanking signal (Hsync (REF)), said counter being arranged to be reset in response to said first one frame rate signal (R₂ᵥ);
second separating means (81b) for separating a second vertical blanking signal (Vsync (VIDEO)) and a second horizontal blanking signal (Hsync (VIDEO)) from said video signal received by said first receiving means (24);
second generating means (82b) for generating a second one frame rate signal (L₂ᵥ ) in response to said second vertical blanking signal (Vsync (VIDEO)) and said second horizontal blanking signal (Hsync (VIDEO)); and
latch means (84) for latching the output of said counter (83) in response to said second one frame rate signal (L₂ᵥ) so as to generate said phase difference signal (ΔV).

6. A video camera apparatus according to any one of the preceding claims, comprising:
a cable (6) for transmitting said phase difference signal (ΔV) from said camera control unit (41) to said video camera (1) and said video signal (VBS) from said video camera (1) to said camera control unit (41); and
means (SW2, 42, 43, 44, 45, 53, 54) for selecting whether to transmit said phase difference signal (ΔV) from said camera control unit (41) to said video camera (1) and said video signal (VBS) from said video camera (1) to said camera control unit (41) using said cable (6) or using said first transmitting means and said second transmitting means.

7. A camera control unit (41) for generating a control signal for controlling a video camera (1), said camera control unit (41) comprising:
means (24) for receiving a video signal (VBS) transmitted from said video camera (1) over a radio channel;
means (80) for comparing the relative phase of said video signal (VBS) received by the receiving means (24) with that of a reference signal (REF) so as to generate a phase difference signal (ΔV) representing the phase difference in terms of the number of video lines the video signal (VBS) is out of phase with respect to the reference signal (REF), said phase difference signal representing a zero phase difference if the phase difference between the received video signal (VBS) and the reference signal (REF) is less than one line;
transmitting means (23) for transmitting said phase difference signal (ΔV) to said video camera (1) over a radio channel;
memory means (32) for storing said video signal (VBS) received by said receiving means (23);
means (34, 35) for generating a write clock signal, in response to said video signal (VBS) received by said receiving means (24), for controlling writing of said video signal (VBS) to said memory means (32); and
means (36, 37) for generating a read clock signal, in response to said reference signal (REF), for controlling reading of said video signal (VBS) from said memory means (32).

8. A unit (41) according to claim 7, wherein said transmitting means is operative to transmit said phase difference signal (ΔV) over a radio channel in the very high frequency (VHF) band.

9. A unit (41) according to claim 7 or claim 8, comprising an encoder (90) for generating a composite signal of said control signal and said phase difference signal (ΔV).

10. A unit according to claim 9, wherein said transmitting means (23) is operative to transmit said composite signal over said radio channel for transmitting said phase difference signal (ΔV).

11. A unit (41) according to any one of claims 7 to 10, wherein said comparing means (80) comprises:
first separating means (81a) for separating a first vertical blanking signal (Vsync (REF)) and a first horizontal blanking signal (Hsync (REF)) from said reference signal (REF);
first generating means (82a) connected to be supplied with said first vertical blanking signal (Vsync (REF)) and said first horizontal blanking signal (Hsync (REF)) for generating a first one frame rate signal (R₂ᵥ);
a counter (83) for counting the number of pulses of said first horizontal blanking signal (Hsync (REF)), said counter being arranged to be reset in response to said first one frame rate signal (R₂ᵥ);
second separating means (81b) for separating a second vertical blanking signal (Vsync (VIDEO)) and a second horizontal blanking signal (Hsync (VIDEO)) from said video signal (VBS) received by said receiving means (24):
second generating means (82b) for generating a second one frame rate signal (L₂ᵥ ) in response to said second vertical blanking signal (Vsync (VIDEO)) and said second horizontal blanking signal (Hsync (VIDEO)); and
latch means (84) for latching the output of said counter (83) in response to said second one frame rate signal (L₂ᵥ) so as to generate said phase difference signal (ΔV).

## Patentansprüche

1. Videokameragerät mit einer Videokamera (1) zur Erzeugung eines Videosignals (VBS) und einer Kamerasteuereinheit (41) zur Erzeugung eines Steuersignals für die Steuerung der Videokamera,
wobei die Kamerasteuereinheit (41) aufweist:
eine erste Empfangseinrichtung (24) für den Empfang eines von der Videokamera (1) ausgesendeten Videosignals (VBS),
eine Vergleichereinrichtung (80) zum Vergleichen der relativen Phase des von der ersten Empfangseinrichtung (24) empfangenen Videosignals (VBS) mit der Phase eines Referenzsignals (REF) und zur Erzeugung eines Phasendifferenzsignals (ΔV), das die Phasendifferenz in Form der Anzahl von Videozeilen repräsentiert, um die das Videosignal (VBS) gegenüber dem Referenzsignal (REF) phasenverschoben ist, wobei das Phasendifferenzsignal eine Nullphasendifferenz repräsentiert, wenn die Phasendifferenz zwischen dem empfangenen Videosignal (VBS) und dem Referenzsignal (REF) kleiner als eine Zeile ist,
eine erste Sendeeinrichtung (23) zum Übertragen des Phasendifferenzsignals (ΔV) zu der Videokamera (1) über einen Funkkanal,
eine Speichereinrichtung (32) zum Speichern des von der ersten Empfangseinrichtung (24) empfangenen Videosignals (VBS),
eine Einrichtung (34, 35) zur Erzeugung eines Schreibtaktsignals in Abhängigkeit von dem von der ersten Empfangseinrichtung (24) empfangenen Videosignal (VBS) für die Steuerung des Einschreibens des Videosignals (VBS) in die Speichereinrichtung (32) und
eine Einrichtung (36, 37) zur Erzeugung eines Lesetaktsignals in Abhängigkeit von dem Referenzsignal (REF) für die Steuerung des Auslesens des Videosignals (VBS) aus der Speichereinrichtung (32),
und wobei die Videokamera (1) aufweist:
eine zweite Empfangseinrichtung (13) für den Empfang des von der Kamerasteuereinheit (41) ausgesendeten Phasendifferenzsignals (ΔV),
eine Einrichtung (15) zur Erzeugung eines Synchronisiersignals (BB),
eine Einrichtung (91, 92, 39) zur Steuerung der Phase des Synchronisiersignals (BB) in Abhängigkeit von dem von der zweiten Empfangseinrichtung (13) empfangenen Phasendifferenzsignal (ΔV),
eine Bildaufnahmeeinrichtung (18) zur Erzeugung des Videosignals (VBS) nach Maßgabe des Sysnchronisiersignals (BB) und
eine zweite Sendeeinrichtung (14) zum Übertragen des Videosignals (VBS) über einen Funkkanal.

2. Gerät nach Anspruch 1, bei dem die erste Sendeeinrichtung (23) das Phasendifferenzsignal (ΔV) über einen im VHF-Band liegenden Funkkanal überträgt und die zweite Sendeeinrichtung das Videosignal (VBS) über einen im Mikrowellen-Frequenzbereich liegenden Funkkanal überträgt.

3. Gerät nach Anspruch 1 oder 2, bei dem die Kamerasteuereinheit (41) einen Kodierer (90) zur Erzeugung eines Signalgemischs aus dem Steuersignal und dem Phasendifferenzsignal (ΔV) aufweist.

4. Gerät nach Anspruch 3, bei dem die erste Sendeeinrichtung (23) das genannte Signalgemisch über den Funkkanal zur Übertragung des Phasendifferenzsignals (ΔV) überträgt.

5. Videokameragerät nach einem der vorhergehenden Ansprüche, bei dem die Vergleichereinrichtung (80) aufweist:
eine erste Trenneinrichtung (81a) zum Abtrennen eines ersten vertikalen Austastsignals (Vsync (REF)) und eines ersten horizontalen Austastsignals (Hsync (REF)) aus dem Referenzsignal (REF),
eine mit dem ersten vertikalen Austastsignal (Vsync (REF)) und dem ersten horizontalen Austastsignal (Hsync (REF)) gespeiste erste Generatoreinrichtung (82a) zur Erzeugung eines ersten Vollbildtaktratensignals (R₂ᵥ),
einen Zähler (83) zum Abzählen der Anzahl der Impulse des ersten horizontalen Austastsignals (Hsync (REF)), der so angeordnet ist, daß er in Abhängigkeit von dem ersten Vollbildtaktratensignals (R₂ᵥ) zurückgesetzt wird,
eine zweite Trenneinrichtung (81b) zum Abtrennen eines zweiten vertikalen Austastsignals (Vsync (VIDEO)) und eines zweiten horizontalen Austastsignals (Hsync (VIDEO)) aus dem von der ersten Empfangseinrichtung (24) empfangenen Videosignal,
eine zweite Generatoreinrichtung (82b) zur Erzeugung eines zweiten Vollbildtaktratensignals (L₂ᵥ) in Abhängigkeit von dem zweiten vertikalen Austastsignal (Vsync (VIDEO)) und dem zweiten horizontalen Austastsignal (Hsync (VIDEO)) und
eine Haltespeicherinrichtung (84) zum Halten des Ausgangssignals des Zählers (83) in Abhängigkeit von dem zweiten Vollbildtaktratensignal (L₂ᵥ) für die Erzeugung des genannten Phasendifferenzsignals (ΔV).

6. Videokameragerät nach einem der vorhergehenden Ansprüche mit
einem Kabel (6) zum Übertragen des Phasendifferenzsignals (ΔV) von der Kamerasteuereinheit (41) zu der Videokamera (1) und des Videosignals (VBS) von der Videokamera (1) zu der Kamerasteuereinheit (41) und
einer Wähleinrichtung (SW2, 42, 43, 44, 45, 53, 54) für die Auswahl, ob das Phasendifferenzsignal (ΔV) von der Kamerasteuereinheit (41) zu der Videokamera (1) und das Videosignal (VBS) von der Videokamera (1) zu der Kamerasteuereinheit (41) mit Hilfe des Kabels (6) oder mit Hilfe der ersten und der zweiten Sendeeinrichtung zu übertragen sind.

7. Kamerasteuereinheit (41) zur Erzeugung eines Steuersignais zur Steuerung einer Videokamera (1), wobei diese Kamerasteuereinheit (41) aufweist:
eine Empfangseinrichtung (24) für den Empfang eines von der Videokamera (1) über einen Funkkanal übertragenen Videosignals (VBS),
eine Vergleichereinrichtung (80) zum Vergleichen der relativen Phase des von der ersten Empfangseinrichtung (24) empfangenen Videosignals (VBS) mit der Phase eines Referenzsignals (REF) und zur Erzeugung eines Phasendifferenzsignals (ΔV), das die Phasendifferenz in Form der Anzahl von Videozeilen repräsentiert, um die das Videosignal (VBS) gegenüber dem Referenzsignal (REF) phasenverschoben ist, wobei das Phasendifferenzsignal eine Nullphasendifferenz repräsentiert, wenn die Phasendifferenz zwischen dem empfangenen Videosignal (VBS) und dem Referenzsignal (REF) kleiner als eine Zeile ist,
eine Sendeeinrichtung (23) zum Übertragen des Phasendifferenzsignals (ΔV) zu der Videokamera (1) über einen Funkkanal,
eine Speichereinrichtung (32) zum Speichern des von der Empfangseinrichtung (24) empfangenen Videosignals (VBS),
eine Einrichtung (34, 35) zur Erzeugung eines Schreibtaktsignals in Abhängigkeit von dem von der ersten Empfangseinrichtung (24) empfangenen Videosignal (VBS) für die Steuerung des Einschreibens des Videosignals (VBS) in die Speichereinrichtung (32) und
eine Einrichtung (36, 37) zur Erzeugung eines Lesetaktsignals in Abhängigkeit von dem Referenzsignal (REF) für die Steuerung des Auslesens des Videosignals (VBS) aus der Speichereinrichtung (32).

8. Einheit (41) nach Anspruch 7, bei der die Sendeeinrichtung das Phasendifferenzsignal (ΔV) über einen im VHF-Band liegenden Funkkanal überträgt.

9. Einheit (41) nach Anspruch 7 oder 8 mit einem Kodierer (90) zur Erzeugung eines Signalgemischs aus dem Steuersignal und dem Phasendifferenzsignal (ΔV).

10. Einheit (41) nach Anspruch 9, bei der die Sendeeinrichtung (23) das genannte Signalgemisch über den genannten Funkkanal zur Übertragung des Phasendifferenzsignals (Δ V) überträgt.

11. Einheit (41) nach einem der Ansprüche 7 bis 10, bei der die Vergleichereinrichtung (80) aufweist:
eine erste Trenneinrichtung (81a) zum Abtrennen eines ersten vertikalen Austastsignals (Vsync (REF)) und eines ersten horizontalen Austastsignals (Hsync (REF)) aus dem Referenzsignal (REF),
eine mit dem ersten vertikalen Austastsignal (Vsync (REF)) und dem ersten horizontalen Austastsignal (Hsync (REF)) gespeiste erste Generatoreinrichtung (82a) zur Erzeugung eines ersten Vollbildtaktratensignals (R₂ᵥ),
einen Zähler (83) zum Abzählen der Anzahl der Impulse des ersten horizontalen Austastsignals (Hsync (REF)), der so angeordnet ist, daß er in Abhängigkeit von dem ersten Vollbildtaktratensignals (R₂ᵥ) zurückgesetzt wird,
eine zweite Trenneinrichtung (81b) zum Abtrennen eines zweiten vertikalen Austastsignals (Vsync (VIDEO)) und eines zweiten horizontalen Austastsignals (Hsync (VIDEO)) aus dem von der ersten Empfangseinrichtung (24) empfangenen Videosignal,
eine zweite Generatoreinrichtung (82b) zur Erzeugung eines zweiten Vollbildtaktratensignals (L₂ᵥ) in Abhängigkeit von dem zweiten vertikalen Austastsignal (Vsync (VIDEO)) und dem zweiten horizontalen Austastsignal (Hsync (VIDEO)) und
eine Haltespeicherinrichtung (84) zum Halten des Ausgangssignals des Zählers (83) in Abhängigkeit von dem zweiten Vollbildtaktratensignal (L₂ᵥ) für die Erzeugung des genannten Phasendifferenzsignals (ΔV).

## Revendications

1. Appareil de caméra vidéo comprenant une caméra vidéo (1) pour générer un signal vidéo (VBS) et une unité de commande de caméra (41) pour générer un signal de commande pour commander ladite caméra vidéo, ladite unité de commande de caméra (41) comprenant :
un premier moyen de réception (24) pour recevoir un signal vidéo (VBS) transmis par ladite caméra vidéo (1) ;
un moyen (80) pour comparer la phase relative d'un signal vidéo (VBS) reçu par ledit premier moyen de réception (24) avec celle d'un signal de référence (REF) afin de générer un signal de différence de phase (ΔV) représentant la différence de phase en terme de nombre de lignes vidéo, le signal vidéo (VBS) est déphasé par rapport au signal de référence (REF), ledit signal de différence de phase représentant une différence de phase nulle si la différence de phase entre le signal vidéo reçu (VBS) et le signal de référence (REF) est inférieure à une ligne ;
un premier moyen de transmission (23) pour transmettre ledit signal de différence de phase (ΔV) à ladite caméra vidéo (1) sur un canal radio ;
un moyen de mémoire (32) pour stocker ledit signal vidéo (VBS) reçu par ledit premier moyen de réception (24) ;
un moyen (34, 35) pour générer un signal d'horloge d'écriture, en réponse audit signal vidéo (VBS) reçu par ledit premier moyen de réception (24), pour commander l'écriture dudit signal vidéo (VBS) dans ledit moyen de mémoire (32) ; et
un moyen (36, 37) pour générer un signal d'horloge de lecture, en réponse audit signal de référence (REF), pour commander la lecture dudit signal vidéo (VBS) à partir dudit moyen de mémoire (32) ;
et ladite caméra vidéo (1) comprenant :
un second moyen de réception (13) pour recevoir ledit signal de différence de phase (ΔV) transmis par ladite unité de commande de caméra (41) ;
un moyen (15) pour générer un signal de synchronisation (BB) ;
un moyen (91, 92, 93) pour commander la phase dudit signal de synchronisation (BB) selon ledit signal de différence de phase (ΔV) reçu par ledit second moyen de réception (13) ;
un moyen de prise de vue (18) pour générer ledit signal vidéo (VBS) selon ledit signal de synchronisation (BB) ; et
un second moyen de transmission (14) pour transmettre ledit signal vidéo (VBS) sur un canal radio.

2. Appareil selon la revendication 1, dans lequel ledit premier moyen de transmission (23) est fonctionnel pour transmettre ledit signal de différence de phase (ΔV) sur un canal radio dans la bande de très haute fréquence (VHF), et ledit second moyen de transmission est fonctionnel pour transmettre ledit signal vidéo (VBS) sur un canal radio dans la bande de fréquence hyperfréquence.

3. Appareil selon la revendication 1 ou la revendication 2, dans lequel ladite unité de commande de caméra (41) comprend un codeur (90) pour générer un signal composite dudit signal de commande et dudit signal de différence de phase (ΔV).

4. Appareil selon la revendication 3, dans lequel ledit premier moyen de transmission (24) est fonctionnel pour transmettre ledit signal composite sur ledit canal radio pour transmettre ledit signal de différence de phase (ΔV).

5. Appareil de caméra vidéo selon l'une quelconque des revendications précédentes, dans lequel ledit moyen de comparaison (80) comprend :
un premier moyen de séparation (81a) pour séparer un premier signal de suppression de faisceau vertical (Vsync (REF)) et un premier signal de suppression de faisceau horizontal (Hsync (REF)) à partir dudit signal de référence (REF) ;
un premier moyen de génération (82a) raccordé pour recevoir ledit premier signal de suppression de faisceau vertical (Vsync (REF)) et ledit premier signal de suppression de faisceau horizontal (Hsync (REF)) pour générer un premier signal de fréquence de trame d'une trame (R₂ᵥ) ;
un compteur (83) pour compter le nombre d'impulsions dudit premier signal de suppression de faisceau horizontal (Hsync (REF)), ledit compteur étant disposé pour être réinitialisé en réponse audit premier signal de fréquence de trame d'une trame (R₂ᵥ) ;
un second moyen de séparation (81b) pour séparer un second signal de suppression de faisceau vertical (Vsync (VIDEO)) et un second signal de suppression de faisceau horizontal (Hsync (VIDEO)) dudit signal vidéo reçu par ledit premier moyen de réception (24) ;
un second moyen de génération (82b) pour générer un second signal de fréquence de trame d'une trame (L₂ᵥ) en réponse audit second signal de suppression de faisceau vertical (Vsync (VIDEO)) et audit second signal de suppression de faisceau horizontal (Hsync (VIDEO)) ; et
un moyen de verrouillage (84) pour verrouiller la sortie dudit compteur (83) en réponse audit second signal de fréquence de trame d'une trame (L₂ᵥ) afin de générer ledit signal de différence de phase (ΔV).

6. Appareil de caméra vidéo selon l'une quelconque des revendications précédentes, comprenant :
un câble (6) pour transmettre ledit signal de différence de phase (ΔV) à partir de ladite unité de commande de caméra (41) à ladite caméra vidéo (1) et ledit signal vidéo (VBS) à partir de ladite caméra vidéo (1) à ladite unité de commande de caméra (41) ; et
un moyen (SW2, 42, 43, 44, 45, 53, 54) pour sélectionner s'il faut transmettre ledit signal de différence de phase (ΔV) à partir de ladite unité de commande de caméra (41) à ladite caméra vidéo (1) et ledit signal vidéo (VBS) à partir de ladite caméra vidéo (1) à ladite unité de commande de caméra (41) en utilisant ledit câble (6) ou en utilisant ledit premier moyen de transmission et ledit second moyen de transmission.

7. Unité de commande de caméra (41) pour générer un signal de commande pour commander une caméra vidéo (1), ladite unité de commande de caméra (41) comprenant :
un moyen (24) pour recevoir un signal vidéo (VBS) transmis par ladite caméra vidéo (1) sur un canal radio ;
un moyen (80) pour comparer la phase relative dudit signal vidéo (VBS) reçu par le moyen de réception (24) avec celle du signal de référence (REF) afin de générer un signal de différence de phase (ΔV) représentant la différence de phase en terme de nombre de lignes vidéo, le signal vidéo (VBS) est déphasé par rapport au signal de référence (REF), ledit signal de différence de phase représentant une différence de phase nulle si la différence de phase entre le signal vidéo reçu (VBS) et le signal de différence (REF) est inférieure à une ligne ;
un moyen de transmission (23) pour transmettre ledit signal de différence de phase (ΔV) à ladite caméra vidéo (1) sur un canal radio ;
un moyen de mémoire (32) pour stocker ledit signal vidéo (VBS) reçu par ledit moyen de réception (23) ;
un moyen (34, 35) pour générer un signal d'horloge d'écriture, en réponse audit signal vidéo (VBS) reçu par ledit moyen de réception (24), pour commander l'écriture dudit signal vidéo (VBS) dans ledit moyen de mémoire (32) ; et
un moyen (36, 37) pour générer un signal d'horloge de lecture, en réponse audit signal de référence (REF), pour commander la lecture dudit signal vidéo (VBS) à partir dudit moyen de mémoire (32).

8. Unité (41) selon la revendication 7, dans laquelle ledit moyen de transmission est fonctionnel pour transmettre ledit signal de différence de phase (ΔV) sur un canal radio dans une bande de très haute fréquence (VHF).

9. Unité (41) selon la revendication 7 ou la revendication 8, comprenant un codeur (90) pour générer un signal composite dudit signal de commande et dudit signal de différence de phase (ΔV).

10. Unité selon la revendication 9, dans laquelle ledit moyen de transmission (23) est fonctionnel pour transmettre ledit signal composite sur ledit canal radio pour transmettre ledit signal de différence de phase (ΔV).

11. Unité (41) selon l'une quelconque des revendications 7 à 10, dans laquelle ledit moyen de comparaison (80) comprend :
un premier moyen de séparation (81a) pour séparer un premier signal de suppression de faisceau vertical (Vsync (REF)) et un premier signal de suppression de faisceau horizontal (Hsync (REF)) dudit signal de référence (REF) ;
un premier moyen de génération (82a) raccordé pour recevoir ledit premier signal de suppression de faisceau vertical (Vsync (REF)) et ledit premier signal de suppression de faisceau horizontal (Hsync (REF)) pour générer un premier signal de fréquence de trame d'une trame (R₂ᵥ) ;
un compteur (83) pour compter le nombre d'impulsions dudit premier signal de suppression de faisceau horizontal (Hsync (REF)), ledit compteur étant disposé pour être réinitialisé en réponse audit premier signal de fréquence de trame d'une trame (R₂ᵥ) ;
un second moyen de séparation (81b) pour séparer un second signal de suppression de faisceau vertical (Vsync (VIDEO)) et un second signal de suppression de faisceau horizontal (Hsync (VIDEO)) dudit signal vidéo (VBS) reçu par ledit moyen de réception (24) ;
un second moyen de génération (82b) pour générer un second signal de fréquence de trame d'une trame (L₂ᵥ) en réponse audit second signal de suppression de faisceau vertical (Vsync (VIDEO)) et audit second signal de suppression de faisceau horizontal (Hsync (VIDEO)) ; et
un moyen de verrouillage (84) pour verrouiller la sortie dudit compteur (83) en réponse audit second signal de fréquence de trame d'une trame (L₂ᵥ) afin de générer ledit signal de différence de phase (ΔV).
